# EUROPEAN PATENT APPLICATION

(11) **EP 4 852 040 A2**
(43) Date of publication of application: **09.12.2026**
(21) Application number: 26210313.8
(22) Date of filing: 03.10.2025
(51) Int. Cl.: H01H 9/04

(54) **SWITCH BOX**

(30) Priority: 25.10.2024 GB 202415792
(62) Document number(s) of the earlier application(s) in accordance with Art. 76 EPC: 25788622.6 / 4 846 189
(71) Applicant: Longvale Ltd, Burton-on-Trent Staffordshire DE13 9PD (GB)
(72) Inventor: Dear, Nathan, Burton-on-Trent, DE13 9PD (GB); O'Driscoll, Mark, Burton-on-Trent, DE13 9PD (GB); Hiron-Jones, Ben, Burton-on-Trent, DE13 9PD (GB); Hunt, Martin Robert, Burton-on-Trent, DE13 9PD (GB)
(74) Representative: Swindell & Pearson Limited

(57) **Abstract**

A switch box is provided comprising: a housing, a rotatable shaft, a rotatable indicator and at least one channel. The housing comprises at least a first housing portion and a second housing portion. The first and second housing portions are connectable to define a chamber for housing one or more switches. Each of the first housing portions comprises a shaft aperture. The rotatable shaft is located partially in the shaft aperture of the first housing portion and partially in the shaft aperture of the second housing portion. The rotatable indicator is arranged to visually indicate a state of opening of a valve, and is connected to the shaft such that the rotatable indicator corotates with the shaft. The channel is arranged to convey electromagnetic radiation, generated inside the chamber, through the housing and out of the switch box. The channel is provided, in part, by a further aperture in one of the first and second housing portions that is different from the shaft apertures in the first and second housing portions. The channel is provided, in part, by a solid transmission medium, located at least partially within the further aperture. The solid transmission medium is at least partially transparent to electromagnetic radiation.

## Description

### TECHNOLOGICAL FIELD

Examples of the disclosure relate to a switch box. Some relate to a switch box for housing one or more sensors/switches which sense the position of a valve in a hazardous environment.

### BACKGROUND

Valves may operate in hazardous environments, for example, in hydrocarbon or hydrogen processing plants. Flammable gases may be present in the environment. Electrical equipment located in such an environment can provide an ignition source, potentially creating a hazard.

One or more sensors/switches may sense whether a valve is in an open state or a closed state. The valve may, for example, control the routing of fluid within a pipe in a hazardous environment. The switch(es) may be located in a switch box which is flameproof, explosion proof and/or intrinsically safe.

US 5,223,822A discloses a switch assembly which comprises an exterior electronic display that indicates a position of a rotary shaft.

### BRIEF SUMMARY

According to various, but not necessarily all, examples there is provided a switch box, comprising: a housing comprising at least a first housing portion and a second housing portion, the first and second housing portions being connectable to define a chamber for housing one or more switches, wherein: the first housing portion comprises a shaft aperture; and the second housing portion comprises a shaft aperture; a rotatable shaft, located partially in the shaft aperture of the first housing portion and partially in the shaft aperture of the second housing portion; a rotatable indicator, arranged to visually indicate a state of opening of a valve, connected to the shaft such that the rotatable indicator corotates with the shaft; and at least one channel arranged to convey electromagnetic radiation, generated inside the chamber, through the housing and out of the switch box, wherein the channel is provided, in part, by a further aperture in one of the first and second housing portions that is different from the shaft apertures in the first and second housing portions, wherein the channel is provided, in part, by a solid transmission medium, located at least partially within the further aperture, wherein the solid transmission medium is at least partially transparent to electromagnetic radiation.

The electromagnetic radiation may include visible light, such that the channel is arranged to convey the visible light through the housing and out of the switch box. The electromagnetic radiation may include radio signals, such that the channel is arranged to convey the radio signals through the housing and out of the switch box.

The switch box may further comprise one or more sources of electromagnetic radiation, located inside the chamber, arranged to transmit electromagnetic radiation along the channel. The one or more sources of electromagnetic radiation may be arranged to transmit visible light along the channel. The one or more sources of electromagnetic radiation may be arranged to transmit radio signals along the channel.

The first and second housing portions may be substantially opaque to electromagnetic radiation, other than the further aperture.

The solid transmission medium may be substantially transparent to electromagnetic radiation. The solid transmission medium may be formed from at least one glass material.

The channel is provided, in part, by a body that is at least partially located within the further aperture. The solid transmission medium is at least partially located within the body.

The switch box may further comprise at least one retainer for retaining the solid transmission medium at least partially within the body.

A spacing between an external surface of the solid transmission medium and an internal surface of the body is 40 micrometres or less.

The switch box may further comprise at least one moisture seal located between the solid transmission medium and the body.

The body may comprise an exterior surface that is arranged to engage with a surface of the further aperture to secure the body to the housing. The exterior surface of the body may be threaded. The surface of the further aperture may be threaded. The threaded exterior surface of the body may be configured to engage with the threaded surface of the further aperture.

The body may comprise an entrance for electromagnetic radiation and an exit for electromagnetic radiation, in order to enable electromagnetic radiation to be conveyed through the body and out of the switch box. The solid transmission medium may be arranged within the body to receive electromagnetic radiation entering the entrance of the body and to enable the received electromagnetic radiation to exit the body via the exit.

The switch box may further comprise at least one moisture seal located at least partially within the body and outside the further aperture. The moisture seal may be partially located in a groove in the body. The body may comprise a head. The groove may be located in the head. The moisture seal, when partially located in the groove in the head of the body, may be arranged to contact the housing around the further aperture.

The channel may include at least one optical device arranged to expand a surface area of visible light conveyed out of the switch box.

According to various, but not necessarily all, examples there is provided a switch box, comprising: a housing comprising at least a first housing portion and a second housing portion, the first and second housing portions being connectable to define a chamber for housing one or more switches, wherein: the first housing portion comprises a shaft aperture; the second housing portion comprises a shaft aperture; and at least one of the first and second housing portions defines a further aperture; an electromagnetic radiation transmission assembly, located at least partially in the further aperture, comprising a solid transmission medium that is at least partially transparent to electromagnetic radiation; at least one source of electromagnetic radiation, located inside the chamber, arranged to transmit electromagnetic radiation through the solid transmission medium and out of the switch box; a rotatable shaft, located partially in the shaft aperture of the first housing portion and partially in the shaft aperture of the second housing portion; and a rotatable indicator, arranged to visually indicate a state of opening of a valve, connected to the shaft such that the rotatable indicator corotates with the shaft.

The electromagnetic radiation transmission assembly comprises: a body located at least partially in the further aperture, and the solid transmission medium which is located at least partially within the body. The at least one source of electromagnetic radiation may be arranged to transmit electromagnetic radiation through the solid transmission medium.

The further aperture may be threaded, the body may be threaded, and the threaded body may be configured to engage with the threaded further aperture. The solid transmission medium may be formed from at least one glass material.

While the above examples of the disclosure and optional features are described separately, it is to be understood that their provision in all possible combinations and permutations is contained within the disclosure. It is to be understood that various examples of the disclosure can comprise any or all the features described in respect of other examples of the disclosure, and vice versa. Also, it is to be appreciated that any one or more or all the features, in any combination, may be implemented by/comprised in/performable by an apparatus, a method, and/or computer program instructions as desired, and as appropriate. The description of a function should additionally be considered to also disclose any means suitable for performing that function.

### BRIEF DESCRIPTION

Some examples will now be described with reference to the accompanying drawings in which:
FIG. 1A illustrates an exploded view of part of a switch box including a first housing portion, a first shaft part, and at least one electromagnetic radiation transmission assembly;
FIG. 1B illustrates an exploded view of part of the switch box including a second housing portion, a second shaft part and a rotatable indicator;
FIG. 2A illustrates an exploded view of the electromagnetic radiation transmission assembly;
FIG. 2B illustrates a perspective view of the electromagnetic radiation transmission assembly;
FIG. 2C illustrates a side view of the electromagnetic radiation transmission assembly;
FIG. 2D illustrates a first cross-sectional view of the electromagnetic radiation transmission assembly taken through A-A in FIG. 2C;
FIG. 2E illustrates a second cross-sectional view of the electromagnetic radiation transmission assembly taken through A-A in FIG. 2C;
FIG. 3A illustrates an exploded view of a shaft including the first shaft part and the second shaft part;
FIG. 3B illustrates a cross-section of the shaft through the line A-A shown in FIG. 3C;
FIG. 3C illustrates a front elevation of the shaft;
FIGs.4A and 4B illustrate upper and lower perspective views of the first housing portion connected to the first shaft part and the electromagnetic radiation transmission assemblies;
FIGs 5A and 5B illustrate upper and lower perspective views of the second housing portion connected to the second shaft part;
FIG. 6A illustrates a plan view of an example of the switch box; and
FIG. 6B illustrates a cross-section of the switch box shown in FIG. 6A, taken through the line marked C-C in FIG. 6A.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

### DETAILED DESCRIPTION

Embodiments of the invention relate to a switch box. The switch box may be for use in a hazardous environment, such as in a hydrocarbon or hydrogen processing plant. Flammable gases may be present in the hazardous environment. The switch box may be for use in a non-hazardous environment. The switch box might be for use inland, or in a coastal or subsea environment.

The switch box may comprise a housing for housing sensors/switches that might sense a state of opening of a valve (e.g., whether a valve is in a fully open state, a partially open state or a closed state). The valve may, for example, be a process control valve. While the term "switch" is used predominantly in this document, the term "sensor" is considered to be synonymous in this context and could be used in place of the term "switch". The switches may, for example, be magnetic proximity switches that provide an electrical output which indicates whether the valve is in a fully open state, a partially open state or a closed state.

The switch box may comprise a channel that is arranged to convey electromagnetic radiation, generated within a chamber, through the housing and out of the switch box. The switch box might include one or more sources of electromagnetic radiation that are configured to convey electromagnetic radiation along the channel and out of the switch box. In some examples, the electromagnetic radiation could include visible light, and the conveyance of the visible light may enable the switch box to be seen in dark conditions. Additionally or alternatively, the electromagnetic radiation could include radio signals, and the conveyance of the radio signals may enable data in the radio signals to be transmitted outside the switch box. This is described in further detail below.

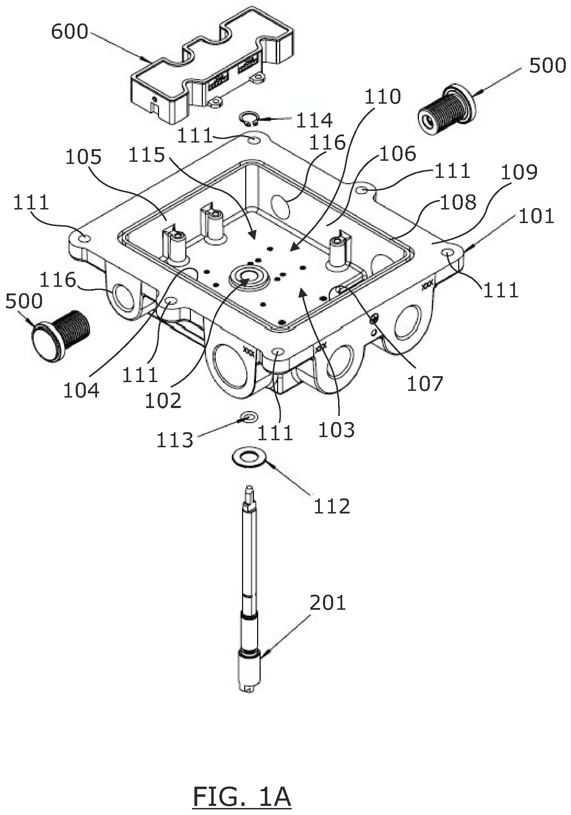

FIG. 1A illustrates an exploded view of part of a switch box including a first housing portion 101, a first shaft part 201, one or more electromagnetic radiation transmission assemblies 500 and one or more sources 600 of electromagnetic radiation.

The first housing portion 101 comprises a shaft aperture 102. The shaft aperture 102 is for receiving and retaining the first shaft part 201. The first housing portion 101 is connectable to a second housing portion (not shown in FIG. 1A) to define a chamber 115 for housing one or more switches. In use, the first housing portion 101 may be a lower housing portion 101 and the second housing portion may be an upper housing portion.

The first housing portion 101 comprises a floor 103 and walls 104-107. The walls 104-107 extend around the periphery of the floor 103 and extend (upwardly) away from the floor 103. The floor 103 provides the floor 103 of the chamber 115 defined by the first housing portion 101 and the second housing portion. Each of the walls 104-107 may provide at least part of a side wall of the chamber 115. In the illustrated example, the aperture 102 is located in the floor 103.

The first housing portion 101 has a lip 108 from which a flange 109 extends. In the illustrated example, the flange 109 extends from the lip in a direction that is substantially perpendicular to the direction from which the walls 104-107 extend from the floor 103. The flange 109 provides a ledge on which the second housing portion can be located. The flange 109 defines one or more fixing locations 111 at which the first housing portion 101 can be fixed to the second housing portion. In this example, each of the fixing locations 111 comprises an aperture. Each aperture may be for receiving a fastener. Each aperture may, for example, be a threaded aperture for receiving a threaded fastener, such as a bolt.

The first housing portion 101 may define one or more mounting locations 110 for mounting one or more switches/sensors within the chamber 115. Each switch may be for sensing a position of a valve. The one or more mounting locations 110 may be located on the floor 103 of the chamber 115. In the illustrated example, the one or more mounting locations 110 comprise one or more mounting apertures in the floor 103.

The first shaft part 201 is connectable to a second shaft part (not shown in FIG. 1A). The first shaft part 201 is locatable at least partially in the aperture 102, such that the first shaft part 201 extends into the chamber 115. A washer 112, a seal 113 and a retainer 114 are illustrated in FIG. 1A.

The seal 113 may be formed from a resilient material. In this regard, the seal 113 may be formed from at least one polymer. The seal 113 may be ring-shaped. The seal 113 is an O-ring seal in the illustrated example. The seal 113 is arranged to be located around the first shaft part 201 adjacent and underneath the aperture 102 in order to prevent or mitigate the ingress of dust or fluids (e.g., water) into the chamber 115. The retainer 114 is arranged to be located around the first shaft part 201 and above the aperture 102. In the illustrated example, the retainer 114 is a circlip. The retainer 114 is configured to retain the first shaft part 201 in the aperture 102 and prevent the first shaft part 201 from dropping out of the aperture 102 under the influence of gravity.

The first housing portion 101 may include at least one further aperture 116. There could be multiple further apertures 116. One or more of the further apertures 116 could be located in one or more of the walls 104-107. In the illustrated example, the further apertures 116 are located in the walls labelled with the reference numerals 104 and 106, and are located opposite one another, although this need not be the case in other examples. Each of the further apertures 116 is for receiving one of the electromagnetic radiation transmission assemblies 500. The combination of a further aperture 116 and an electromagnetic radiation transmission assembly 500 may be considered to form a channel for conveying electromagnetic radiation, generated inside the chamber 115, through the first housing portion 101 and out of the switch box. This is described in further detail below.

The one or more sources 600 of electromagnetic radiation may be configured to generate electromagnetic radiation for transmission through the channel provided by a further aperture 116 and an electromagnetic radiation transmission assembly 500. The one or more sources 600 may be located inside the chamber 115 and may therefore be arranged to generate electromagnetic radiation inside the chamber 115. The one or more sources 600 may, for example, include one or more sources 600 for generating electromagnetic radiation in the visible light spectrum. Additionally or alternatively, the one or more sources 600 may include one or more sources 600 for generating electromagnetic radiation in the radio wave spectrum. In this regard, the one or more sources 600 may be arranged to transmit radio signals carrying data. The data may, for example, be modulated onto the radio waves to generate the radio signals. In some implementations, the radio waves might be (short range) radio signals such as those complying with an 802.11 Institute of Electrical Engineers (IEEE) standard, otherwise known as a WiFi standard.

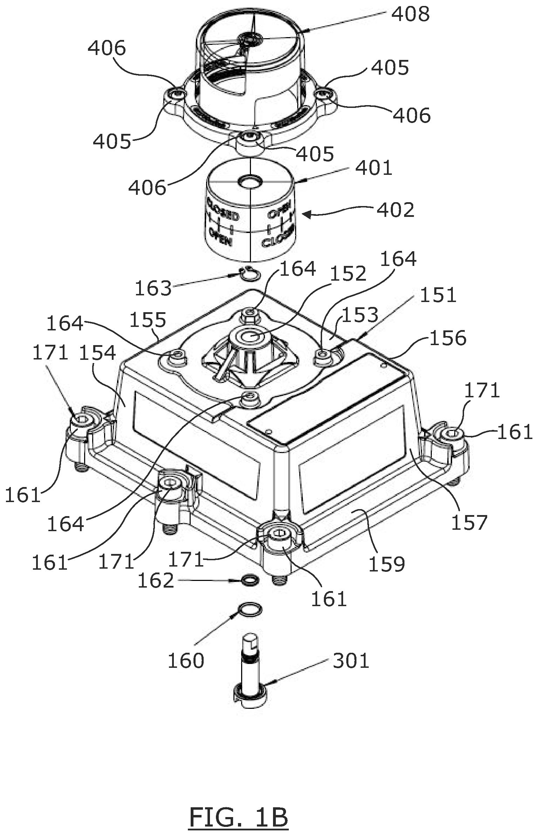

FIG. 1B illustrates an exploded view of part of the switch box including the second housing portion 151, a second shaft part 301 and a rotatable indicator 401. The second housing portion 151 comprises an aperture 152. The aperture 152 is for receiving and retaining the second shaft part 301.

The second housing portion 151 comprises an upper wall/roof 153 and walls 154-157. The walls 154-157 extend around the periphery of the upper wall 153 and extend (downwardly) from the upper wall 153. The upper wall 153 provides the upper wall/roof of the chamber 115 that is defined when the first and second housing portions 101, 151 are connected. Each of the walls 154-157 may provide at least a part of a side wall of the chamber 115. In the illustrated example, the aperture 152 is located in the upper wall 153. The upper wall 153 has an inner surface that at least partially defines the chamber 115. The inner surface provides at least part of a ceiling of the chamber 115. The aperture 152 is also provided in a boss that protrudes from an exterior surface of the upper wall 153.

The second housing portion 151 has a lip (not shown in FIG. 1B) from which a flange 159 extends. In the illustrated example, the flange 159 extends from the lip in a direction that is substantially perpendicular to the direction from which the walls 154-157 extend from the upper wall 153. The flange 159 of the second housing portion 151 is arranged to be located on the flange 109 of the first housing portion 101. In this example, the flange 159 of the second housing portion 151 contacts the flange 109 of the first housing portion 101 when located thereon.

The flange 159 defines one or more fixing locations 171 at which the second housing portion 151 can be fixed to the first housing portion 101. In this example, each of the fixing locations 171 comprises an aperture. Each aperture may be for receiving a fastener 161. Each aperture may, for example, be a threaded aperture for receiving a threaded fastener, such as a bolt. The fixing locations 111 of the first housing portion 101 may be aligned with the fixing locations 171 of the second housing portion 151 to enable the first and second housing portions 101, 151 to be fixed together.

The rotatable indicator 401 is arranged to visually indicate a state of opening of a valve (e.g., whether the valve is in an open state, a partially open state or a closed state). The switch box comprises a cover 408 for the rotatable indicator 401. The upper wall 153 of the second housing portion 151 may comprise one or more fixing locations 164 at which the cover 408 may be fixed to the upper wall 153. The fixing locations 164 may be spaced from the aperture 152 and located around the aperture 152. The fixing locations 164 may, for example, be apertures, such as threaded apertures. The cover 408 may comprise one or more fixing locations 405 for use in fixing the cover 408 to the upper wall 153 of the second housing portion 151. The fixing locations 405 may be apertures. Each aperture may be a threaded aperture. The fixing locations 164 of the upper wall 153 may be aligned with the fixing locations 405 of the cover 408, when fixing the cover 408 to the upper wall 153. One or more fasteners, such as one or more threaded fasteners (e.g., one or more bolts) 406, may be used to fix the cover 408 to the upper wall 153.

The rotatable indicator 401 may include text and/or graphics 402 which visually indicate the state of opening of a valve. The rotatable indicator 401 is shaped to be located inside the cover 408, and is arranged to rotate relative to (and inside) the cover 408. At least a portion of the cover 408 may be substantially transparent to enable the text and/or graphics 402 to be seen through the cover 408. The rotatable indicator 401 is arranged to be fixedly connected to the second shaft part 301, such that the rotatable indicator 401 co-rotates with the second shaft part 301, and such that the rotatable indicator 401 rotates with the first shaft part 201 when the first and second shaft parts 201, 301 are connected. When the rotatable indicator 401 is connected to the second shaft part 301, and the second shaft part 301 is connected to the first shaft part 201, the rotatable indicator 401, the second shaft part 301 and the first shaft part 201 are arranged to rotate about the same axis of rotation. The axis of rotation extends along the longitudinal dimension of each of the first shaft part 201 and the second shaft part 301.

The source(s) 600 of electromagnetic radiation may be arranged to cause different electromagnetic waves to be transmitted based on the state of opening of the valve. Electromagnetic waves having a first characteristic may be transmitted by the source(s) 600 if the state of opening is a first state and electromagnetic waves having a second characteristic (different from the first characteristic) may be transmitted if the state of opening is a second state (different from the first state). For example, the first state might be an open state for the valve and the second state might be a closed state for the valve. If the one or more sources 600 of electromagnetic radiation include light waves, then the first characteristic might be a first colour of light (e.g., green, when the valve is open) and the second characteristic might be a second colour of light (e.g., red, when the valve is closed). Thus, whether the light waves have the first characteristic or the second characteristic might indicate the current state of opening of the valve (e.g., to a user). If the one or more sources 600 of electromagnetic radiation include radio waves, the first and second characteristic might be data carried by the radio waves that indicates the state of opening of the valve. For instance, the first characteristic might be data indicating that the valve is open, and the second characteristic might be data indicating that the valve is closed.

The change from the transmitted electromagnetic waves having the first characteristic to having the second characteristic may occur substantially simultaneously with a change in the state of opening of the valve indicated by the rotatable indicator 401. For example, when the valve is open, both the transmitted electromagnetic waves and the rotatable indicator 401 may indicate that the valve is open, and, when the valve is closed, both the transmitted electromagnetic waves and the rotatable indicator 401 may indicate that the valve is closed.

In some embodiments, the switch box may comprise processing circuitry and one or more sensors/switches. The processing circuitry may receive inputs from the one or more sensors/switches which indicates a state of opening of the valve (e.g., whether the valve is open or closed). The processing circuitry and the one or more sensors/switches may be located in the chamber 115. The processing circuitry may control the source(s) 600 of electromagnetic radiation to transmit electromagnetic radiation in the manner described above, based at least in part on those inputs. In some examples, there might not be any processing circuitry. For example, alternative (e.g., hard-wired) electrical circuitry may be provided to cause the output of the source(s) 600 of electromagnetic radiation to change from having a first characteristic to a second characteristic based on the output provided by the one or more sensors/switches.

The switch box may comprise a retainer 163 that is configured to retain the second shaft part 301 in the aperture 152 in the second housing portion 151. The retainer 163 is arranged to be located around the second shaft part 301 and above the aperture 152. In the illustrated example, the retainer 163 is a circlip. The retainer 163 is configured to retain the second shaft part 301 in the aperture 152 and prevent the second shaft part 301 from dropping out of the aperture 152 under the influence of gravity.

The switch box may comprise one or more seals 160, 162 which may mitigate or prevent the ingress of fluids (e.g., water, in the form of moisture) into the chamber 115. Each of the seals 160, 162 may be formed from a resilient material. In this regard, each of the seals 160, 162 may be formed from at least one polymer. Each of the seals 160, 162 may be ring-shaped.

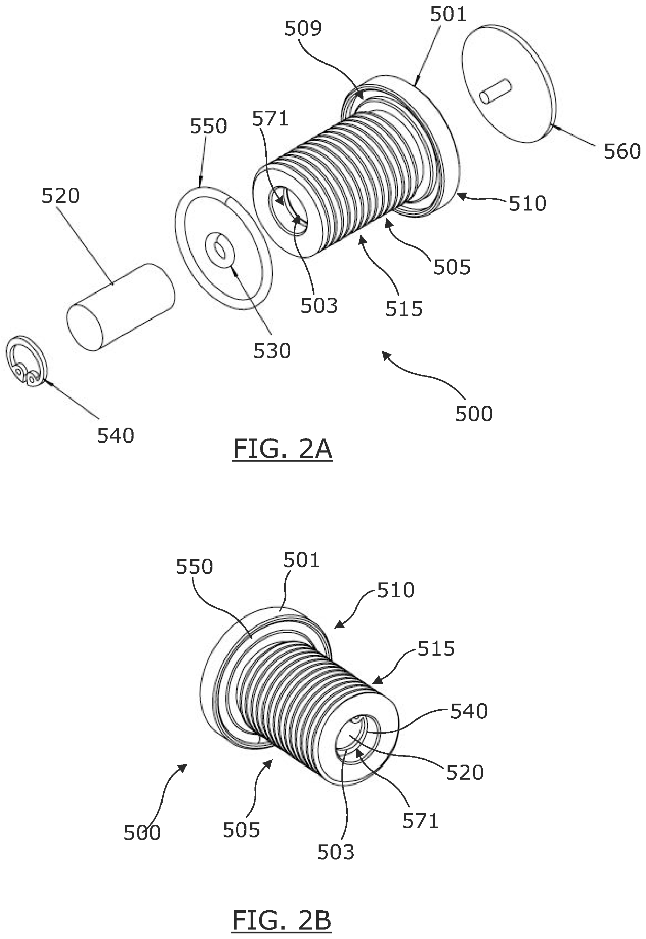

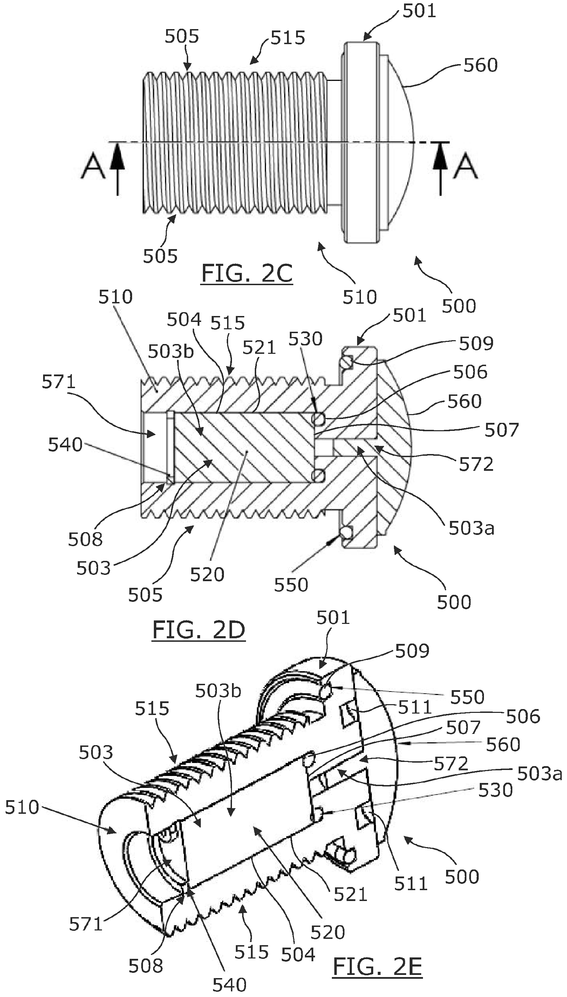

FIG. 2A illustrates an exploded view of an example of an electromagnetic radiation transmission assembly 500. FIGs. 2B and 2C illustrate perspective and side views of the electromagnetic radiation transmission assembly 500. FIGs 2D and 2E illustrate first and second cross-sectional views of the electromagnetic radiation transmission assembly 500 through the line A-A in FIG. 2C.

The illustrated example of the electromagnetic radiation transmission assembly 500 includes a body 510, a transmission medium 520, a first moisture seal 530, a retainer 540, a second moisture seal 550 and an optical device 560.

The body 510 may include an exterior surface 515 that is configured to engage with a surface of the further aperture 116 of the first housing portion 101. The exterior surface 515 may be curved. In the illustrated example, the exterior surface 515 is threaded, and is configured to engage with a corresponding threaded surface of the further aperture 116. Use of the threaded surfaces may be advantageous in that any gap between the threaded surfaces presents a long flame path from the chamber 115 to the external environment. Any flame would be starved of oxygen before the end of the flame path is reached. However, it will be appreciated by those skilled in the art that a suitably long flame path could be achieved in other ways and, thus, in other examples neither the exterior surface 515 of the body 510 nor the surface of the further aperture 116 need be threaded, and these surfaces may engage in a different manner.

The illustrated body 510 includes a head 501 and a shaft 505. The exterior surface 515 that engages with the further aperture 116 of the first housing portion 101 is a surface 515 of the shaft 505 in the illustrated example. The shaft 505 is substantially cylindrical in shape.

The transmission medium 520 is a solid. The transmission medium 520 is at least partially transparent to electromagnetic radiation (for example, at least partially transparent to visible light and/or radio waves). The transmission medium 520 may be substantially transparent to electromagnetic radiation (for example, substantially transparent to visible light and/or radio waves), such the transmission medium 520 itself causes little to no attenuation of the electromagnetic radiation travelling through it. The transmission medium 520 might be formed from at least one glass material, such as borosilicate glass.

The body 510 is configured to receive the transmission medium 520, such that the transmission medium 520 is at least partially located within the body 510. In the illustrated example, the transmission medium 520 is wholly located within the body 510. In this regard, the body 510 may define a cavity 503 in which the transmission medium 520 may be located. The cavity 503 is located in the shaft 505 of the body 510 in this example. The cavity 503 may be substantially cylindrical in shape, although this need not be the case in every example.

As best seen in FIGs. 2D and 2E, the cavity 503 may include a first portion 503a and a second portion 503b. The first and second portions 503a, 503b may be interlinked. The transmission medium 520 may be located in the second portion 503b. In the illustrated example, the first portion 503a of the cavity 503 is smaller than the second portion 503b. That is, the first portion 503a has a smaller transverse extent/diameter than the second portion 503b.

As best seen in FIGs. 2D and 2E, a spacing between an external surface 521 of the transmission medium 520 and an internal surface 504 of the body 510 is 40 micrometres or less. The internal surface 504 may at least partially define the (first portion 503a of) the cavity 503. In the illustrated example, the external surface 521 of the transmission medium 520 is curved and the internal surface 504 of the body 510 is curved. The two surfaces 504, 521 are in register with one another. The small spacing between the external surface 521 of the transmission medium 520 and the internal surface 504 of the body 510 advantageously helps to prevent electrical sparks from travelling through the spacing between them, making the assembly 500 suitable for environments where an explosion-proof switch box is required.

Each of the first and second moisture seals 530, 550 may be formed from a resilient material. In this regard, the seals 530, 550 may be formed from at least one polymer. Each seal 530, 550 may be ring-shaped. Each seal 530, 550 is an O-ring seal in the illustrated example. The first seal 530 may be smaller than the second seal 550.

The first moisture seal 530 may be located between the transmission medium 520 and a wall 507 of the body 510 defining the (first portion 503a of) the cavity 503 (see FIGs 2D and 2E), providing an interface between the two. In the illustrated example, a groove 506 is provided in the (wall 507 of the) body 510 for receiving the first moisture seal 530. When the first moisture seal 530 is located in the groove 506, the first moisture seal 530 abuts the wall 507 and the transmission medium 520.

The retainer 540 is configured to retain the transmission medium 520 in the cavity 503. The retainer 540 may, for example, be a circlip. A groove 508 is provided in the body 510 for receiving the retainer 540. The groove 508 may be located in a (curved) surface 504 of the body 510 at one end of the transmission medium 520, such that when the retainer 540 is located in the groove 508, the retainer 540 abuts the transmission medium 520. The retainer 540 is located at an opposite end of the transmission medium 520 from the first moisture seal 530. That is, the transmission medium 520 is located between the first moisture seal 530 and the retainer 540.

The second moisture seal 550 may be located partially within the body 510 and outside the further aperture 116 of the first housing portion 101. The second moisture seal 550 may be located in a groove 509 in the body 510. The groove 509 may be located in the head 501. The head 501 is located at one end of the shaft 505. The groove 509 may be located in a planar surface of the head 501. When the assembly 500 is connected to the first housing portion 101 by locating the body 510 at least partially in the further aperture 116, the second moisture seal 550 may contact the (wall 104, 106 of the) first housing portion 101 around the further aperture 116.

At least one optical device 560 may be optionally provided if the assembly 500 is used to convey visible light, and, if so, the optical device 560 is configured to expand a surface area of visible light conveyed out of the switch box. The optical device 560 may be a diffuser or a lens, for example. In the illustrated example (see FIGs 2D and 2E), a portion of the optical device 560 is located in the second portion 503b of the cavity in order to hold the optical device 560 in place. This need not be the case in other examples.

The head 501 may include one or more recesses 511 (see FIG. 2E). In some examples, the one or more recesses 511 can be used to rotate the assembly 500 when screwing the assembly 500 into the further aperture 116 in the first housing portion 101. Alternatively, the head 501 could have a hexagonal cross section to enable it to be screwed. In some examples, the one or more recesses 511 may be used to connect the optical device 560 to the head 501 after the rest of the assembly 500 has been inserted into the further aperture 116.

A channel for conveying electromagnetic light through the housing and out of the switch box is provided by the further aperture 116 (in the first housing portion 101) and the assembly 500.

The first and second housing portions 101, 151 may be substantially opaque to electromagnetic radiation (e.g., visible light and/or radio waves), other than the further aperture 116. That is, the only location at which electromagnetic radiation can pass through the first housing portion 101 or the second housing portion 151 (i.e., through the housing as a whole), is at the further aperture(s) 116. For example, the electromagnetic radiation might be in the visible light spectrum, and the further aperture(s) 116 might be the only location at which visible light can pass through the first housing portion 101 or the second housing portion 151. The electromagnetic radiation might be in the radio wave spectrum, and the further aperture(s) 116 might be the only location at which radio waves can pass through the first housing portion 101 or the second housing portion 151. This may be because the first and second housing portions 101, 151 are formed one or more materials that are opaque to electromagnetic radiation, such as from one or more metals. In this regard, in the absence of the further aperture(s) 116, the housing portions 101, 151 would act as a faraday cage.

The body 510 may be formed from one or more materials that are opaque to electromagnetic radiation, such as one or more metals. The body 510 includes an entrance 571 for electromagnetic radiation and an exit 572 for electromagnetic radiation. The entrance 571 is an entrance to the cavity 503, and the exit 572 is an exit of the cavity 503.

The one or more sources 600 of electromagnetic radiation are arranged to transmit electromagnetic radiation along the channel formed by a further aperture 116 and an electromagnetic radiation transmission assembly 500. In use, the one or more sources 600 of electromagnetic radiation located in the chamber 115 generate electromagnetic radiation. The source(s) 600 could include a light source (e.g., one or more light emitting diodes) which generates visible light and/or a radio signal transceiver which generates radio signals. The visible light and/or radio signals are conveyed by the channel through the housing and out of the switch box.

The electromagnetic radiation enters the body 510 via the entrance 571. The electromagnetic radiation is received by the transmission medium 520 and conveyed along the transmission medium 520 before exiting the transmission medium 520 and then exiting the body 510 via the exit 572.

If the electromagnetic radiation is visible light, as explained above, an optical device 560 may expand the surface area of the exiting light. The exiting light may enable the switch box to be seen more easily in dark conditions. If the electromagnetic radiation is radio waves, the exiting radio waves enable electronics within the switch box to communicate with electronics outside the switch box. For example, data may be transmitted out of the switch box or received into the switch box via the radio signals.

Advantageously, the channel provided by a further aperture 116 and the electromagnetic radiation transmission assembly 500 enables electromagnetic radiation to be transmitted out of the switch box, while also enabling the switch box to be used in hazardous environments and/or wet/damp conditions. The construction of the electromagnetic radiation transmission assembly 500 and its location in the aperture 116 may be considered to be "explosion proof", such that any sparks, flames or explosions occurring within the switch box would be contained within the switch box. This may be in part because there is no path through the aperture 116 or the assembly 500 that has a gap diameter of greater than 40 micrometres, and/or that any path from the chamber 115 of the switch box to the external environment is long enough for a flame to have been starved of oxygen before the external environment is reached. This means that the switch box is safe to use in environments where flammable fluids (e.g., gases) may be present.

The construction of the electromagnetic radiation transmission assembly 500 and its location in the aperture 116 may be such that moisture ingress is prevented or greatly mitigated by the use of the seals 530, 550 and the connection between the assembly 500 and the aperture 116, making it suitable for use in wet/damp conditions.

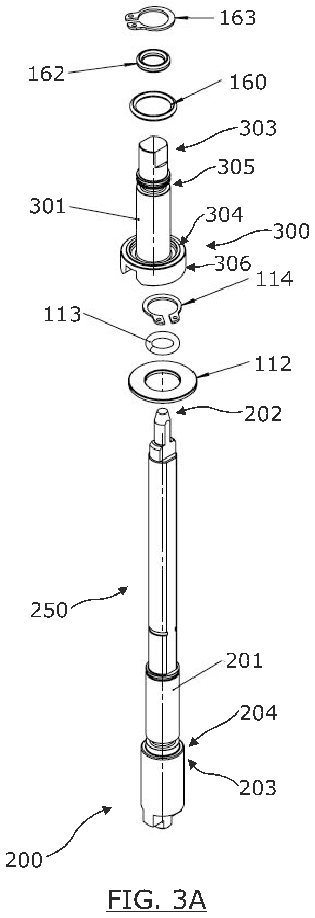

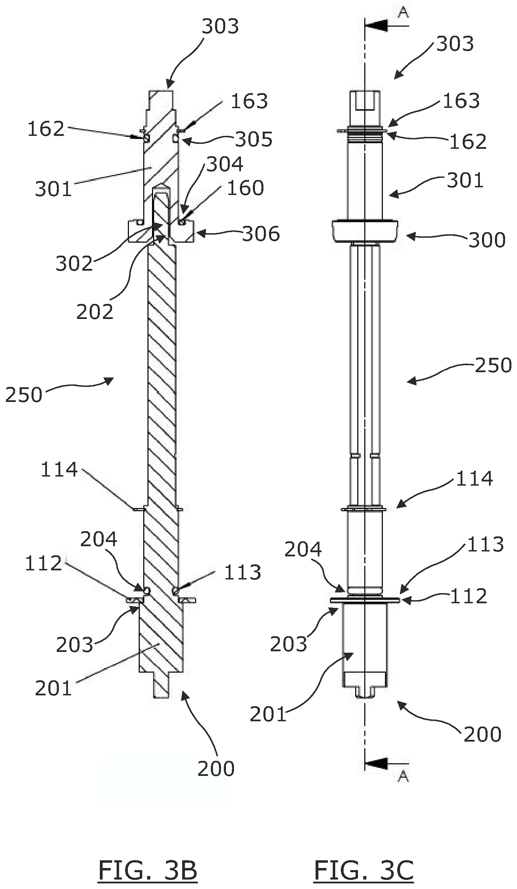

FIG. 3A illustrates an exploded view of a shaft 250 including the first shaft part 201 and the second shaft part 301. FIG. 3B illustrates a cross-section of the shaft 250 through the line A-A shown in FIG. 3C. FIG. 3C illustrates a front elevation of the shaft 250.

While the first shaft part 201 is shown as being larger than the second shaft part 301 in FIGs 3A, 3B and 3C, this might not be the case in other examples. For instance, the second shaft part 301 might be substantially the same size as, or larger than, the first shaft part 201.

The first shaft part 201 is removably connectable to the second shaft part 301. The first shaft part 201 and the second shaft part 301 may be connected to each other such that they are fixed to one another. The connection between the first shaft part 201 and the second shaft part 301 is removable in the sense that the first and second shaft parts 201, 301 can be disconnected after they have been connected (and subsequently re-connected).

When the first and second shaft parts 201, 301 are connected, in the event that the first shaft part 201 is rotated, for example by an actuator, the second shaft part 301 co- rotates with the first shaft part 201.

The first shaft part 201 comprises a proximal end 200 and a distal end 202. The proximal end 200 is operatively connectable to an actuator. They are operatively connectable in the sense that an output from the actuator causes rotation of the first shaft part 201. The actuator may be a rotary actuator, or a linear actuator. If the actuator is a linear actuator, a mechanical device may be present between the shaft 250 and the linear actuator to convert the linear motion of the actuator into rotary motion, in order to rotate the first shaft part 201.

The first shaft part 201 may be directly connectable to the second shaft part 301, as shown in FIGs 3A, 3B and 3C. The first and second shaft parts 201, 301 may be directly connectable via a male-female connection. As best seen in FIG. 3B, in the illustrated example, the distal end 202 of the first shaft part 201 is arranged to enter a recess 302 in the second shaft part 301 such that the distal end 202 provides the male part and the recess 302 provides the female part, but in other examples it could be the other way around. The recess 302 is located at a proximal end 300 of the second shaft part 301. In the illustrated example, the distal end 202 has a flat head and the recess 302 is a linear recess for receiving the flat head, but it is contemplated that in other examples, the shape of the distal end 202 and/or the recess 302 could be different. For instance, the recess 302 could be cross-shaped, or both the distal end 202 and the recess 302 could be cross-shaped. Provided that the first and second shaft parts 201, 301 connect in a manner that causes them to co-rotate, the exact nature of the connection does not necessarily matter.

The first shaft part 201 comprises a ledge 203 on which the washer 112 may be located. In the illustrated example, the ledge 203 is a circumferential ledge that is located around a curved outer surface of the first shaft part 201. When the washer 112 is located on the ledge 203, the washer 112 is positioned outside the chamber 115 of the housing defined by the first and second housing portions 101, 151.

The first shaft part 201 comprises a recess 204. In the illustrated example, the recess 204 is a circumferential recess that is located around a curved outer surface of the first shaft part 201. The recess 204 is located above the ledge 203, and between the ledge 203 and the distal end 202 of the first shaft part 201.

The second shaft part 301 comprises a proximal end 300 and a distal end 303. The distal end 303 may be connectable to the rotatable indicator 401. The distal end 303 may be fixed to the rotatable indicator 401, such that the rotatable indicator 401 co- rotates with the second shaft part 301 when the second shaft part 301 is rotated. The rotatable indicator 401 may comprise a recess for receiving the distal end 303 of the second shaft part 301. In some examples, the distal end 303 of the second shaft part 301 has a flat head and the recess of the rotatable indicator 401 is a linear recess for receiving the flat head, but it is contemplated that in other examples, the shape of the distal end 303 and/or the recess could be different. For instance, the recess could be cross-shaped, or both the distal end 303 and the recess could be cross-shaped. Provided that the second shaft part 301 and the rotatable indicator 401 connect in a manner that causes them to co-rotate, the exact nature of the connection does not necessarily matter.

The second shaft part 301 comprises one or more recesses 304, 305 for receiving the one or more seals 160, 162. In the illustrated example, multiple recesses 304, 305 are provided and each recess 304, 305 is for receiving a seal 160, 162, but in other examples only a single recess might be provided in the second shaft part 301 for receiving a single seal.

The illustrated second shaft part 301 comprises a flange 306. In this example, the flange 306 is located at the proximal end 300 of the second shaft part 301. In other examples, the flange 306 could be located at the distal end 303 of the second shaft part 301.

It can be seen in FIG. 3B that the flange 306 extends outwardly, in a radial direction, at substantially the same axial location along the second shaft part 301 at which the recess 302 is located to receive the distal end 202 of the first shaft part 201. The flange 306 extends outwardly, in a radial direction, further than the first shaft part 201 extends in the same direction when the first and second shaft parts 201, 301 are connected together.

The flange 306 is arranged to support a first one 160 of the seals 160, 162. A first one 304 of the recesses 304, 305 is arranged to receive the first seal 160 and is located in the flange 306. The first seal 160 may be seated in the first recess 304. The first recess 304 extends around a curved outer surface of the second shaft part 301. In the illustrated example, the first recess 304 is located in a substantially planar surface of the flange 306. The substantially planar surface is an upper surface of the flange 306. The first seal 160 may be located partially in the first recess 304, such that part of the first seal 160 is located in the first recess 304 and part of the first seal 160 protrudes beyond the first recess 304.

A second one 305 of the recesses 304, 305 for receiving a second one 162 of the seals 160, 162 is located around the curved outer surface of the second shaft part 301. The second recess 305 is spaced axially from the first recess 304. That is, the second recess 305 is spaced from the first recess 304 along an axis of rotation of the shaft 250. The second seal 162 may be seated in the second recess 305. The second recess 305 extends around a curved outer surface of the second shaft part 301. The second recess 305 is a circumferential recess and is located in the curved outer surface of the second shaft part 301. The second seal 162 may be located partially in the second recess 305, such that part of the second seal 162 is located in the second recess 305 and part of the second seal 162 protrudes beyond the second recess 305. In this regard, the second seal 162 can be considered to extend around the second shaft part 301.

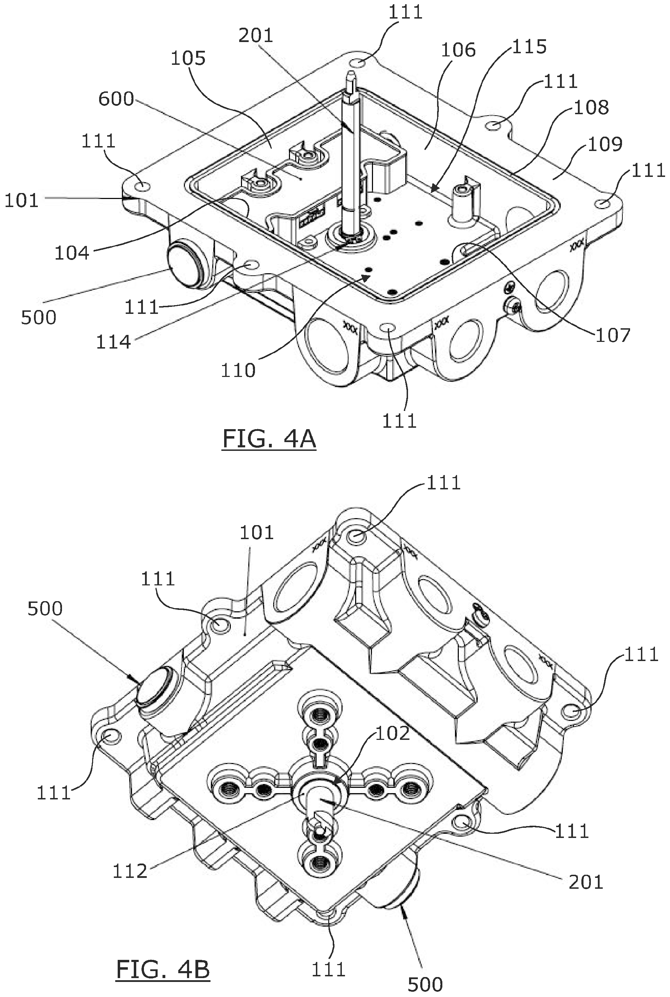

FIGs.4A and 4B illustrate upper and lower perspective views of the first housing portion 101 connected to the first shaft part 201. It can be seen in FIGs 4A and 4B that the first shaft part 201 is located partially in the aperture 102 in the first housing portion 101 and extends into the chamber 115 that is partially defined by the first housing portion 101. FIG. 4A shows the retainer 114 located around the first shaft part 201 and above the aperture 102 in the first housing portion 101, such that the retainer 114 is located inside the chamber 115. FIG. 4B shows the underside of the first housing portion 101, and the washer 112 located underneath the first housing portion 101 (and outside the chamber 115). The first shaft part 201 is located partially in the chamber 115, partially in the aperture 102, and partially outside the chamber 115. As shown in FIG. 4B, the aperture 102 in the first housing portion 101 is provided in a boss that protrudes from an underside of the first housing portion 101.

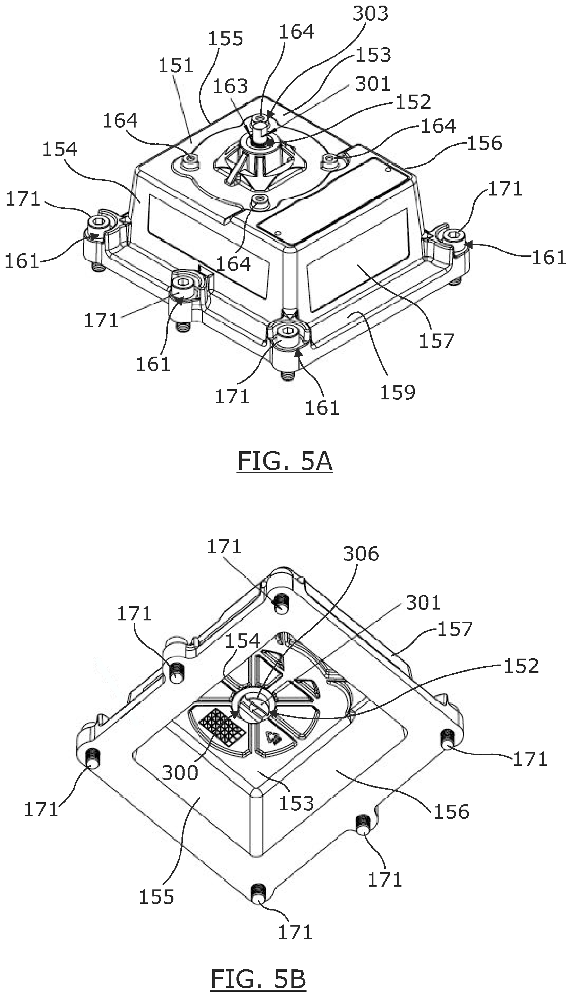

FIGs 5A and 5B illustrate upper and lower perspective views of the second housing portion 151 connected to the second shaft part 301. It can be seen in FIGS 4A and 4B that the second shaft part 301 extends into the chamber 115. The inner surface of the upper wall 153 partially defines the chamber 115, and the second shaft part 301 extends beyond that inner surface into the chamber 115. The second shaft part 301 is partially located outside the chamber 115, partially located in the aperture 152, and partially located inside the chamber 115. The distal end 303 of the second shaft part 301 is located outside the chamber 115 and the proximal end 300 is located inside the chamber 115. The flange 306, which is located at the proximal end 300 of the second shaft part 301, is located inside the chamber 115. The flange 306 is located adjacent the inner surface of the upper wall 153 of the second housing portion 151.

An advantage of the proximal end 300 of the second shaft part 301 being located in the chamber 115 is that it enables a user to use her fingers to rotate the second shaft part 301 into a position at which the second shaft part 301 is connectable to the first shaft part 201. For example, if the distal end 202 of the first shaft part 201 has a flat head and the proximal end 300 of the second shaft part 301 has a correspondingly shaped recess 302, the flat head and the recess 302 can be lined up such that the flat head can be received in the recess 302.

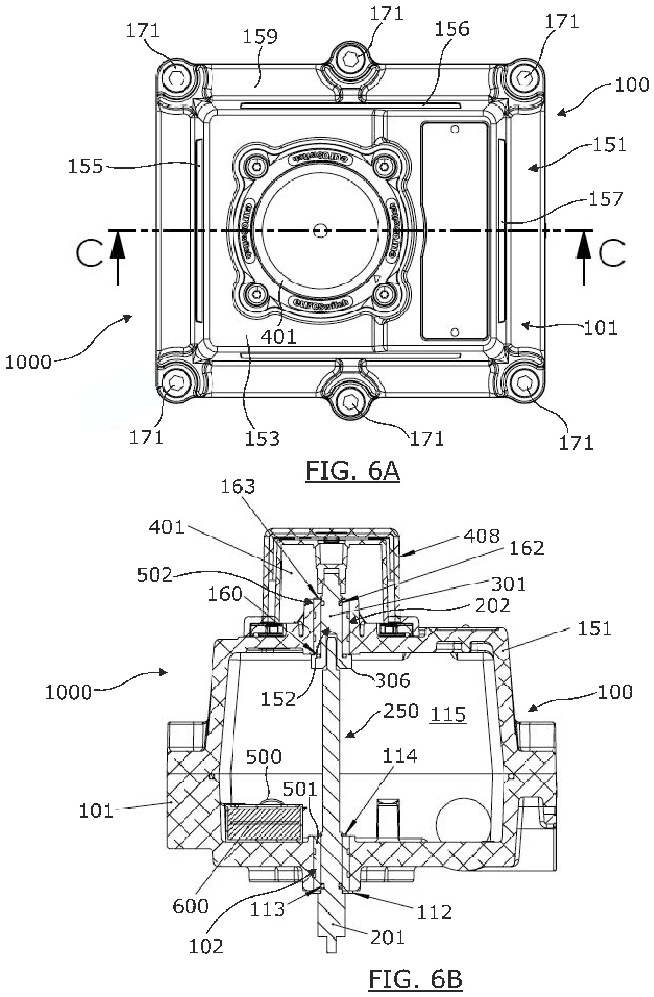

FIG. 6A illustrates a plan view of an example of the switch box 1000. FIG. 6B illustrates a cross-section of the switch box 1000 shown in FIG. 6A, taken through the line marked C-C in FIG. 6A. Some of the reference numerals from previous FIGs have been omitted from FIG. 6B to aid clarity.

The switch box 1000 may further comprise at least one bushing 501, 502. In the illustrated example, a first bushing 501 and a second bushing 502 are provided.

The first bushing 501 may be at least partially located in the aperture 102 in the first housing portion 101. In the illustrated example, the first bushing 501 is wholly located within the aperture 102, but this need not necessarily be the case in other examples. The first bushing 501 may be shaped as a hollow cylinder. The first shaft part 201 is partially located in the first bushing 501 and is arranged to rotate within the first bushing 501. The first bushing 501 may be impregnated with oil to reduce friction between the first shaft part 201 when the first shaft part 201 rotates relative to the first bushing 501.

In some examples, the first bushing 501 is substantially formed from at least one metal, for instance, an alloy such as brass.

The seal 113 is located at least partially within the aperture 102 and at least partially within the bushing 501. In the illustrated example, the seal 113 is located wholly within the aperture 102 and wholly within the bushing 501.

The second bushing 502 may be at least partially located in the aperture 152 in the second housing portion 151. In the illustrated example, the second bushing 502 is wholly located within the aperture 152, but this need not necessarily be the case in other examples. The second bushing 502 may be shaped as a hollow cylinder. The second shaft part 301 is partially located in the second bushing 502 and extends beyond the second bushing 502 into the chamber 115. The second shaft part 301 is arranged to rotate within the second bushing 502. The second bushing 502 may be impregnated with oil to reduce friction between the second shaft part 301 when the second shaft part 301 rotates relative to the second bushing 502. In some examples, the second bushing 502 is substantially formed from at least one metal, for instance, an alloy such as brass.

FIG. 6B shows the shaft 250 extending through the chamber 115 defined by the housing 100 formed from first and second housing portions 101, 151. In this example, the distal end 202 of the first shaft part 201 extends into the recess 302 at the proximal end 300 of the second shaft part 301, such that both the first shaft part 201 and the second shaft part 301 are located in the aperture 152 in the second housing portion 151. Furthermore, both the first shaft part 201 and the second shaft part 301 are partially located inside the second bushing 502.

The flange 306 is located outside the aperture 152 in the second housing portion 151 and the second bushing 502. In the illustrated example, the flange 306 is located wholly outside the aperture 152 and the second bushing 502 such that no part of the flange 306 is inside the aperture 152 or the second bushing 502.

It was explained above that the switch box 1000 comprises one or more seals 160, 162. The seals 160, 162 may perform two main functions. As explained above, they may mitigate or prevent the ingress of fluids (e.g., flammable gases) into the chamber 115. They may resist the rotation of the rotatable indicator 401 and the second shaft part 301, when the second shaft part 301 is disconnected from the first shaft part 201. This is explained in further detail below.

Each of the seals 160, 162 may be located around and in contact with the second shaft part 301.

It can be seen in FIG. 6B that the second seal device 162 is located at least partially within the aperture 152 in the second housing portion 151. The second seal 162 is also located within the second bushing 502. The second seal 162 is arranged to contact the second shaft part 301 and the second bushing 502. More specifically, in the illustrated example, the second seal 162 is arranged to contact a curved outer surface of the second shaft part 301 and a curved inner surface of the second bushing 502.

The contact that the second seal 162 makes with the second shaft part 301 and the second bushing 502 creates a seal between the two to mitigate or prevent the ingress of dust or fluids (e.g., water) into the chamber 115. Furthermore, when the second shaft part 301 is rotated, that contact creates friction which resists the rotation of the second shaft part 301 within the second bushing 502.

The first seal 160 is located at least partially outside the aperture 152 of the second housing portion 151, and at least partially outside the second bushing 502. It can be seen in FIG. 6B that the first seal 160 is located wholly outside the aperture 152 of the second housing portion 151, and wholly outside the second bushing 502. The first seal 160 is arranged to contact the second bushing 502 outside the aperture 152 of the second housing portion 151. The first seal 160 is arranged to contact a (substantially flat) surface of the second bushing 502. That surface provides a portion of the ceiling of the chamber 115 in the illustrated example.

The presence of two seals 160, 162 provides the switch box 1000 and its contents with added protection against water or dust ingress.

When the second housing portion 151 is disconnected from the first housing portion 101 (e.g., prior to initial installation, or following installation for maintenance purposes), the second shaft part 301 is disconnected from the first shaft part 201. Some prior switch boxes include a single shaft that extends through an aperture in a lower housing portion, through a chamber, through an aperture in an upper housing portion, and then shaft connects directly to the rotatable indicator. In such prior switch boxes, when the housing portions are disconnected, the rotatable indicator is free to rotate, and connecting the shaft to the rotatable indicator can be difficult. In contrast, in embodiments of the invention, the friction provided by the seals/friction devices 160, 162 resists the rotation of the rotatable indicator 401 (and the second shaft part 301), such that after the first and second housing portions 101, 151 have been disconnected and the first and second shaft parts 201, 301 are disconnected, there may be little to no rotation of the second shaft part 301 and the rotatable indicator 401. This may enable the first and second shaft parts 201, 301 to be easily connected together when the first and second housing portions 101, 151 are re-connected.

It was explained above that the housing 100 may house one or more sensors/switches that are configured to sense a state of opening of a valve (e.g., whether the valve is in an open state, a partially open state or a closed state). The shaft 250 may be operatively connected to an actuator for transitioning the valve between its open state and its closed state.

Each switch may provide an output that is indicative of a state of opening of the valve, such as the valve being in an open state, a partially open state, or a closed state. The output provided by the switch may be an electrical output. In some embodiments, each switch is a magnetic proximity switch that provides an output which is configured to change in dependence on the presence of a target. The target may be at least partially formed from a ferrous material. Each target may include a permanent magnet.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can', or 'may' refers to a particular instance in a class of examples. A property of the instance can be a property of only that instance or a property of the class or a property of a sub-class of the class that includes some but not all the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims. For example, while a shaft 250 having multiple shaft parts 201, 301 is described above and illustrated in the FIGs, in other examples the shaft 250 may be formed from a single part. Although the further apertures 116 for receiving the electromagnetic radiation transmission assemblies 500 are located in the first housing portion 101 in the illustrated examples, they could instead be located in the second housing portion 151.

Features described in the preceding description may be used in combinations other than the combinations explicitly described above.

Although functions have been described with reference to certain features, those functions may be performable by other features whether described or not.

The description of a feature, such as an apparatus or a component of an apparatus, configured to perform a function, or for performing a function, should additionally be considered to also disclose a method of performing that function. For example, description of an apparatus configured to perform one or more actions, or for performing one or more actions, should additionally be considered to disclose a method of performing those one or more actions with or without the apparatus.

Although features have been described with reference to certain examples, those features may also be present in other examples whether described or not.

The term 'a', 'an' or 'the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

## Claims

1. A switch box (1000), comprising:
a housing (100) comprising at least a first housing portion (101) and a second housing portion (151), the first and second housing portions being connectable to define a chamber (115) for housing one or more switches, wherein:
the first housing portion comprises a shaft aperture (102); and
the second housing portion comprises a shaft aperture (152);
a rotatable shaft (250), located partially in the shaft aperture of the first housing portion and partially in the shaft aperture of the second housing portion;
a rotatable indicator (401), arranged to visually indicate a state of opening of a valve, connected to the shaft such that the rotatable indicator corotates with the shaft; and
at least one channel (116, 500) arranged to convey electromagnetic radiation, generated inside the chamber, through the housing and out of the switch box,
wherein the channel (116, 500) is provided, in part, by a further aperture (116) in one of the first and second housing portions that is different from the shaft apertures in the first and second housing portions,
wherein the channel (116, 500) is provided, in part, by a body (510) that is at least partially located within the further aperture (116), and
wherein the channel (116, 500) is provided, in part, by a solid transmission medium (520), located at least partially within the further aperture, wherein the solid transmission medium is at least partially transparent to electromagnetic radiation, wherein the solid transmission medium (520) is at least partially located within the body (510), and wherein a spacing between an external surface (521) of the solid transmission medium (520) and an internal surface (504) of the body (510) is 40 micrometres or less..

2. The switch box (1000) of claim 1, wherein the electromagnetic radiation includes visible light, such that the channel (116, 500) is arranged to convey the visible light through the housing (100) and out of the switch box (1000).

3. The switch box (1000) of claim 1 or 2, wherein the electromagnetic radiation includes radio signals, such that the channel (116, 500) is arranged to convey the radio signals through the housing (100) and out of the switch box (1000).

4. The switch box (1000) of claim 1, 2 or 3, further comprising: one or more sources (600) of electromagnetic radiation, located inside the chamber (115), arranged to transmit electromagnetic radiation along the channel (116, 500).

5. The switch box (1000) of claim 4 when dependent upon claim 2, wherein the one or more sources (600) of electromagnetic radiation are arranged to transmit visible light along the channel (116, 500).

6. The switch box (1000) of claim 4 or 5 when dependent upon claim 3, wherein the one or more sources (600) of electromagnetic radiation are arranged to transmit radio signals along the channel (116, 500).

7. The switch box (1000) of any of the preceding claims, wherein the first and second housing portions (101, 151) are substantially opaque to electromagnetic radiation, other than the further aperture (116).

8. The switch box (1000) of any of the preceding claims, wherein the solid transmission medium (520) is substantially transparent to electromagnetic radiation.

9. The switch box (1000) of any of the preceding claims, wherein the solid transmission medium (520) is formed from at least one glass material.

10. The switch box (1000) of claim 8 or 9, further comprising: at least one moisture seal (530) located between the solid transmission medium (520) and the body (510).

11. The switch box (1000) of any of the preceding claims, wherein the body (510) comprises an exterior surface (515) that is arranged to engage with a surface of the further aperture (116) to secure the body (510) to the housing (100).

12. The switch box (1000) of claim 11, wherein the exterior surface (515) of the body (510) is threaded, the surface of the further aperture (116) is threaded, and the threaded exterior surface (515) of the body (510) is configured to engage with the threaded surface of the further aperture (116).

13. The switch box (1000) of any of the preceding claims, wherein the body (510) comprises an entrance (571) for electromagnetic radiation and an exit (572) for electromagnetic radiation, in order to enable electromagnetic radiation to be conveyed through the body (510) and out of the switch box (1000).

14. The switch box (1000) of claim 13, when dependent upon claim 8, wherein the solid transmission medium (520) is arranged within the body (510) to receive electromagnetic radiation entering the entrance (571) of the body and to enable the received electromagnetic radiation to exit (572) the body (510) via the exit.

15. The switch box (1000) of any of the preceding claims, further comprising: at least one moisture seal (550) located at least partially within the body (510) and outside the further aperture (116).
